Europäisches Patentamt

European Patent Office

Office européen des brevets

(11) Publication number : **0 349 159 B1**

(12) **EUROPEAN PATENT SPECIFICATION**

(45) Date of publication of patent specification :
09.09.92 Bulletin 92/37

(51) Int. CI.⁵ : **F16K 31/40**

(21) Application number : **89306055.8**

(22) Date of filing : **15.06.89**

(54) **Pilot type controlled electromagnetic valve system.**

(30) Priority : **28.06.88 JP 160552/88**

(43) Date of publication of application :
**03.01.90 Bulletin 90/01**

(45) Publication of the grant of the patent :
**09.09.92 Bulletin 92/37**

(84) Designated Contracting States :
**CH DE FR GB IT LI NL**

(56) References cited :
**GB-A- 2 076 117**
**US-A- 3 439 895**
**US-A- 4 383 234**

(73) Proprietor : **Kiyohara, Masako**
**408, Yamamuro Shimizu-cho**
**Kumamoto-shi Kumamoto-ken (JP)**

(72) Inventor : **Sonoda, Yoshiteru**
**EG3-432, 1-5, Awaji Higashi**
**Yodogawa-ku Osaka (JP)**
Inventor : **Tomita, Atsuo**
**6-11-26, Tsurumi**
**Tsurumi-ku Osaka (JP)**
Inventor : **Ideta, Eiji Kamata Mansion, 4F**
**Minami, 7-19**
**Minami Kamikosaka Higashi-Osaka**
**Osaka (JP)**
Inventor : **Nishino, Koji Daini Heianso, 2-6-33**
**Hanazono Higashi-machi**
**Higashi-Osaka Osaka-fu (JP)**
Inventor : **Tsubomoto, Koichi**
**2-5-8, Setoguchi Hirao-ku**
**Osaka (JP)**

(74) Representative : **Tribe, Thomas Geoffrey et al**
**F.J. Cleveland & Company 40-43 Chancery**
**Lane**
**London WC2A 1JQ (GB)**

EP 0 349 159 B1

## Description

## BACKGROUND OF THE INVENTION

The present invention relates to a compactly-designed and energy-saving pilot type controlled electromagnetic valve system for use mainly in controlling water supply.

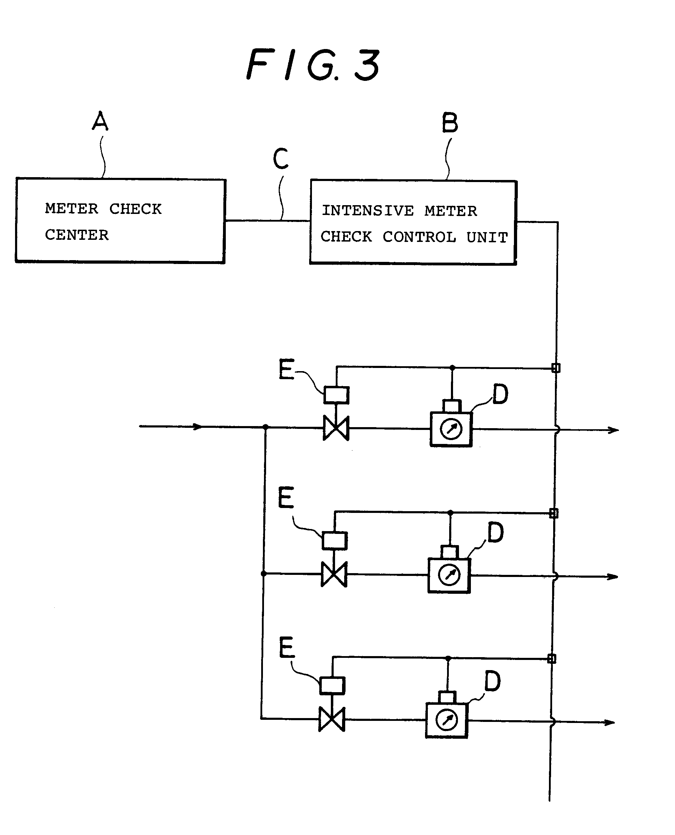

In recent years, a so-called automatic meter check system utilizing a microprocessor-controlled water meter has been under development for the water supply systems in large cities. Fig. 3 shows the construction of a typical automatic meter check system. In Fig. 3, the meter check center A of the water supply side and the intensive meter check control unit B of the user side telecommunicate via a telephone line C to remotely and intensively control the reading of the water meter D of each user, as well as the opening and closing operations of the water supply controlling valve system E via the intensive meter check control unit B.

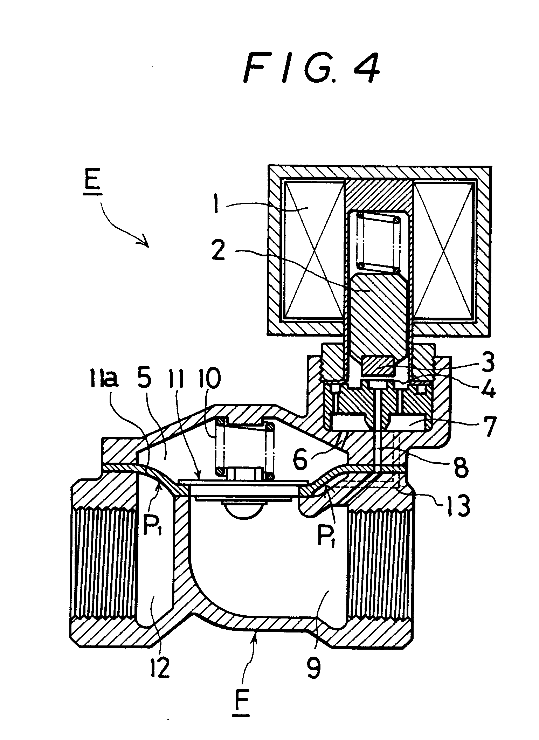

Such a water supply controlled valve system E usually takes the form of a pilot type controlled electromagnetic valve system as shown in Fig. 4. In Fig. 4, when the coil 1 of a solenoid is excited through remote control to attract a plunger 2 for separating a pilot valve disk 3 from its valve seat 4, the water pressure inside the bonnet chamber 5 of the main valve F is released successively through a fluid path 6, a pilot valve chamber 7, and a fluid path 8 toward a secondary fluid path 9. Consequently, a diaphragm 11a is pressed upward by the primary fluid pressure $P_1$ to push the main valve disk 11 upward against the force of a spring 10. With the above operation, the primary fluid path 12 is communicated with the secondary fluid path 9 to consequently open the main valve F.

When the excitation of the coil 1 is interrupted, the pilot valve 3 moves downward to close the fluid path 8. With this operation, the fluid in the primary path is conducted into the bonnet chamber 5 of the main valve F successively through a primary pressure path 13, the pilot valve chamber 7, and the fluid path 6, by which the internal pressure of the bonnet chamber 5 is increased by the primary fluid pressure to press the main valve disk 11 downward and consequently close the main valve F.

However, in a controlled electromagnetic valve system having the above construction, it is necessary to continuously supply a large current to excite the solenoid coil during the opening or closing operations of the main valve F. Therefore, a power source having a large capacity is necessary in order to cope with the large power consumption, which also incurs the problems of heat generation, etc.

Furthermore, for the integration of a driving power inside the controlled valve system, it is difficult to reduce the size of the valve, due to the necessity of having a large-sized power source for the above reasons, which also results in a significant increase in the size of the water supply controlled valve system. GB-A-2076117 patent application discloses a controlled electromagnetic valve system for irrigation purposes where a separate solenoid drive control unit, and an associated battery power supply, feeds current to the solenoid for switch control of a valve between open and closed states. Since the two units are separate and the current control unit includes various other components such as a moisture measurement device, there is no need for the unit, and in particular the solenoid drive control unit, to be particularly small. Indeed the unit incorporates a DC-DC converter and various other components and is therefore quite large.

However, if there is a requirement that both components, that is the controller and motorised valve, should be provided in a single compact unit at one location, this prior art design is not suitable. The present invention has for its object to solve the problem of providing a suitable and compact device.

Accordingly the present invention provides a pilot type controlled electromagnetic valve system comprising:

a main valve having a valve housing provided with a valve seat, a diaphragm valve disk, and a bonnet;

a pilot valve having a valve housing fixed to the main valve, a pilot valve disk, a fluid path for communicating a pilot valve chamber and the bonnet chamber of the main valve, a primary fluid pressure path for communication between the pilot valve chamber and the primary fluid path of the main valve, and a fluid path which provides communication between the pilot valve chamber and the secondary fluid path of the main valve, to be opened and closed by the operation of said pilot valve disk and associated parts;

a latching solenoid which is provided with a plunger whose tip portion is connected to the pilot valve disk and holds the plunger in a retracted position or in a protruding position by means of a permanent magnet; and

a solenoid drive control unit provided with a battery power source for supplying a discharge current from a capacitor to the excitation coil of said solenoid in accordance with valve opening signals from an external device;

characterised in that the solenoid drive control unit is integrally fixed on the main valve, and that a circuit is provided which is arranged so that said capacitor or capacitors, is charged to a pre-determined value and then provides a pulse discharged current to the excitation coil for actuation of the valve for opening or closing the valve, whereby current is only provided by the battery at the time when valve actuation is required.

Thus, because the battery only needs to supply current at times of actuation of the valve, the battery can be very much smaller. Moreover, use of the pulse discharge arrangement in itself requires less energy from the battery. This in turn means that the unit can be provided as a compact combined system incorporating both controller and motorised valve and it can be provided at a location where replacement of the battery is only needed at very infrequent intervals.

The reason that this arrangement is acceptable is that in valves of this kind, particularly for control of water supply, the valve is normally held in an open or closed condition for a long time. Thus the valve does not have to rapidly operate in conditions of fluctuating requirements. Thus, it does not matter if the valve takes a given finite time to open or close. Thus, the capacitor can be arranged to charge up relatively slowly from a small battery over a given time period and then to discharge once a pre-determined voltage has been reached.

An embodiment of the invention well now be described by way of example with reference to the accompanying drawings.

[Construction]

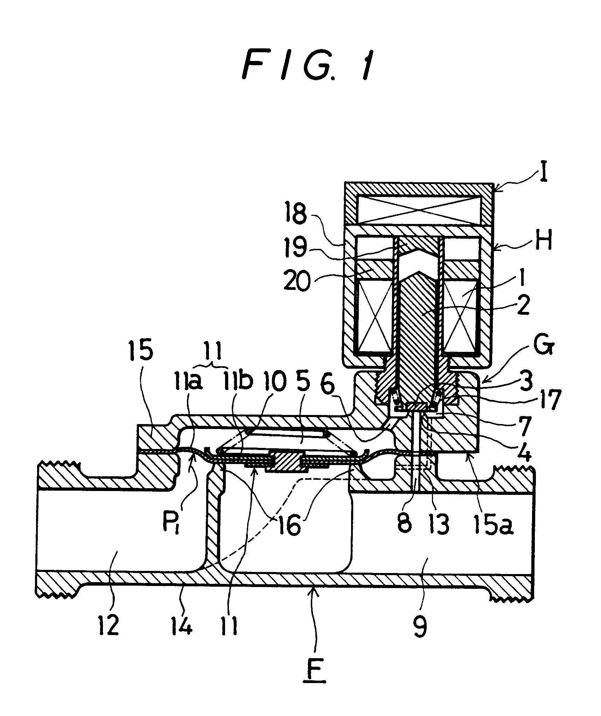

With reference to Fig. 1, the controlled valve system in accordance with the present invention comprises a main valve F having a valve housing 14 provided with a valve seat 16, a diaphragm valve disk 11, and a bonnet 15; a pilot valve G having a valve housing 15a fixed to the main valve F, a pilot valve disk 3, a fluid path 6 for communicating a pilot valve chamber 7 and the bonnet chamber 5 of the main valve F, a primary fluid pressure path 13 for communicating the pilot valve chamber 7 and the primary fluid path 12 of the main valve F, a fluid path 8 for communicating the pilot valve chamber 7 and the secondary fluid path 9 of the main valve F, to be opened and closed by the operation of the pilot valve disk 3, etc.; a latching solenoid H which is provided with a plunger 2 whose tip portion is connected to the pilot valve disk 3 to hold the plunger 2 in a retracted position by means of a permanent magnet 20, or hold the plunger 2 in a protruding position by means of a spring 17; and a solenoid drive control unit I which is provided with a battery power source 24 to supply a discharge current from a capacitor to the excitation coil of the solenoid H in accordance with valve-opening and valve-closing control signals from an external device.

[Operation]

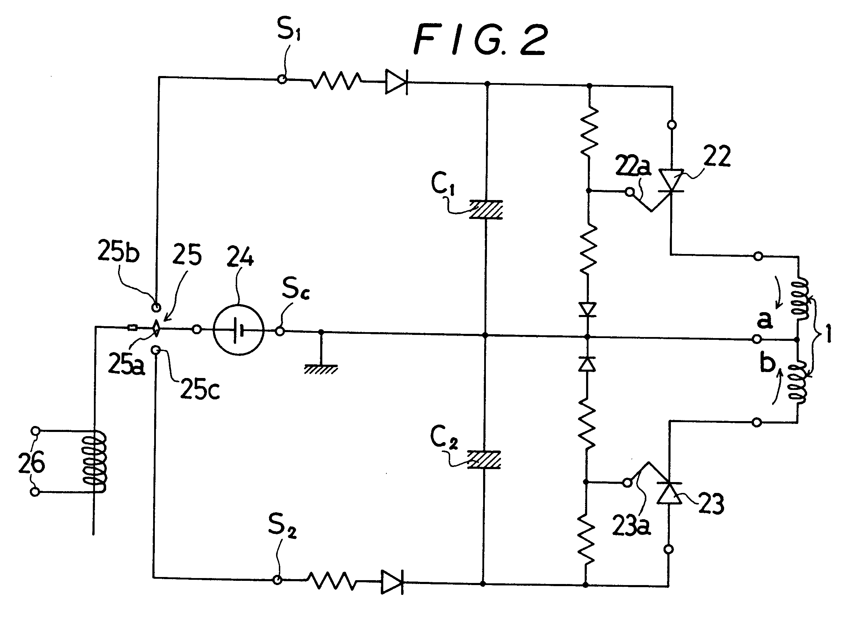

With reference to Fig. 2, when a valve-opening signal (or a valve-closing signal) is input to the solenoid drive control unit I of the valve system, a capacitor $C_1$ (or $C_2$) starts to charge. When the charging of the capacitor $C_1$ (or $C_2$) is completed, a switching circuit is activated to supply the discharge current from the capacitor $C_1$ (or $C_2$) to the excitation coil 1 and disconnect the battery power source from the capacitor $C_1$ (or $C_2$).

When the discharge current in a pulse waveform is supplied to the excitation coil 1, the plunger 2 is activated to be held in the retracted position (or the protruding position). With the above operation, the pilot valve G is opened (or closed) to decrease (or increase) the water pressure inside the bonnet chamber 5 and consequently open (or close) the main valve F.

[Effect]

The controlled valve system in accordance with the present invention adopts a construction where the pilot valve G is driven to cooperate with the main valve F and a pulse discharge current from the capacitor C is supplied as an excitation current from the solenoid drive control unit I to the excitation coil 1 of the solenoid H, which is of a latching type, for operating the pilot valve G. With the above construction, the pilot valve G can be opened and closed merely by supplying a pulse discharge current to the excitation coil 1 for a very short period, which also results in remarkable energy savings as well as total elimination of the danger of overheating the excitation coil 1.

BRIEF DESCRIPTION OF THE DRAWINGS

Fig. 1 is a vertical section view of a controlled electromagnetic valve system in accordance with the present invention.

Fig. 2 is the circuit diagram of a solenoid drive control unit.

Fig. 3 is a block diagram of a water supply automatic meter check system to which the pilot type controlled electromagnetic valve system of the present invention is applied.

Fig. 4 is a vertically sectioned view of a conventional pilot electromagnetic valve system.

DETAILED DESCRIPTION OF THE INVENTION

The following describes an embodiment in accordance with the present invention based on Figs. 1 and 2. Note that, in Figs. 1 and 2, the parts equivalent to those in Fig. 4 are denoted with the same reference numbers.

Fig. 1 is a vertically sectioned view of a controlled electromagnetic valve system in accordance with the present invention. The controlled electromagnetic valve system is composed of a main valve F, a pilot valve G, a latching solenoid H, and a solenoid drive control unit I.

The main valve F is composed of a valve housing 14, a bonnet 15 provided with an integrated pilot valve G, and a diaphragm valve disk 11. The valve housing 14 includes a primary fluid path 12, a diaphragm valve seat 16, and a secondary fluid path 9. The diaphragm valve disk 11 is composed of a diaphragm 11a and a diaphragm disc plate 11b. The diaphragm valve disk 11 is disposed between the bonnet 15 and the valve housing 14 with interposition of a spring 10 to be mounted on the diaphragm seat 16, which can be separable and accessible with respect to the diaphragm seat.

The pilot valve G is formed integratedly with the bonnet 15, and composed of a valve housing 15a formed with a pilot valve chamber 7 and a valve seat 4 as well as a valve disk 3. The valve chamber 7 is communicated with a bonnet chamber 5 via a fluid path 6, communicated with the primary fluid path 12 via a fluid path 13, and communicated with the secondary fluid path 9 via a fluid path 8. By opening and closing the fluid path 8 with the upward and downward movements of the valve disk 3, the diaphragm valve disk 11 of the main valve F is moved upward and downward to open and close the main valve F.

In more detail, a plunger 2 of a solenoid H (described in detail hereinafter) protrudes downward to make the pilot valve disk 3 abut against the valve seat 4 by the force of a spring 17 and consequently closes the fluid path 8. With this operation, the water pressure on the primary side is exerted inward toward the bonnet chamber 5 successively via the fluid path 13, the valve chamber 7, and the fluid path 6. Consequently, the diaphragm valve disk 11 abuts against the valve seat by the pressure of the spring 10 to close the valve. Conversely, when the plunger 2 is attracted upward against the force of the spring 17 to open the fluid path 8, the water pressure inside the bonnet chamber 5 decreases. Consequently, the diaphragm valve disk 11 is pressed upward by the water pressure $P_1$ on the primary side to open the main valve F.

The monostable latching solenoid H is composed of an excitation coil 1, a plunger 2, a spring 17, a yoke 18, an iron core 19, a permanent magnet 20, etc. The tip portion of the plunger 2 is connected to the valve disk 3 of the pilot valve G.

In the monostable latching solenoid H, there is no current through the excitation coil 1, except during a short period at the activation time. The plunger 2 is held in the retracted position against the force of the spring 17 by the magnetic flux passing through the permanent magnet 20, plunger 2, iron core 19, yoke 18, and permanent magnet 20. Consequently, the valve disk 3 is separated from the valve seat 4 to open the pilot valve G and the main valve F.

In order to close the main valve F, an excitation current in a pulse waveform is generated in the excitation coil 1 from the solenoid drive control unit I (described in detail hereinafter) to generate a magnetic flux for offsetting the magnetic flux of the permanent magnet 20. The generated magnetic flux momentarily reduces the magnetic flux through the plunger 2, by which the plunger 2, whose holding force is now lost, is pushed downward by the force of the spring 17 to close the pilot valve G. The plunger 2 is of course held in the downward protruding position by the force of the spring 17. The closing operation of the pilot valve G also closes the main valve F as explained hereinbefore.

Fig. 2 shows an example circuit of the solenoid drive control unit I, in which the numeral 1 denotes the excitation coil, the numerals 22 and 23 denote SCRs, the numerals 22a and 23a denote the SCR gates, the numeral 24 denotes the power source battery, the numeral 25 denotes a changeover switch, and the numeral 26 denotes a signal input terminal.

When a signal representing of "open valve" is input to the input terminal 26 from an intensive meter control unit B, etc., the contact 25a of the changeover switch 25, which is normally in the open position, is connected to the terminal 25b. When a signal representing of "close valve" is input to the input terminal 26, the contact 25a is connected to the contact 25c.

When the "open valve" signal is input to the input terminal 26 to connect the battery 24 across the terminals $S_1$ and Sc, firstly the capacitor $C_1$ starts to be electrically charged. When the terminal voltage across the capacitor $C_1$ is increased to a predetermined value with the electric charge and the input voltage to the gate 22a reaches a value for permitting operation, the SCR 22 conducts a discharge current from the capacitor $C_1$ through a part of the excitation coil 1 in the direction indicated by an arrow a. Consequently, the plunger 2 is attracted, to open the pilot valve G and the main valve F.

Conversely, when the "close valve" signal is input to the input terminal 26, the battery 24 is connected across the terminals $S_2$ and Sc to start charging the capacitor $C_2$. When the charging of the capacitor $C_2$ makes the input voltage of the gate 22b reach a predetermined value, the SCR 23 conducts a discharge current from the capacitor $C_2$ through a part of the excitation coil in the direction indicated by an arrow b. Consequently the pilot valve G and main valve F are closed.

The charging periods of the capacitors $C_1$ and $C_2$ are individually selected to be 30 to 120 seconds, while the conducting period of the SCRs 22 and 23 are individually selected to be 0.1 to 0.2 second. The contact 25a of the changeover switch 25 is set back to the open position by inhibiting the input signal to the input terminal 26 when the discharging operations of the capacitors $C_1$ and $C_2$ are completed.

The power source battery 24 takes the form of a solar battery or a lithium battery (1,300 mAH, 6 V). It has been assured that the above batteries can provide power for opening and closing the main valve F, where the former can operate semi-permanently and the latter can operate for more than 4 years when used ten times a day.

The controlled valve system in accordance with the present invention adopts a way of charging the capacitor C in a certain period from the battery power source 24 and automatically supplying a pulse discharge current to the excitation coil 1 from the capacitor C after completion of the charging operation. Therefore, even a battery power source 24 having a comparatively small capacity can provide the impulse excitation current necessary for operating the solenoid. In comparison to a case in which a certain excitation current for activating the excitation coil 1 is directly supplied from the battery power source, the system of the present invention has the advantage of a reduced battery capacity. As a result, a compact battery can be used, which also leads to a reduction in the size of the controlled electromagnetic valve system.

As mentioned above, the controlled valve system in accordance with the present invention can provide superior effects in many applications.

## Claims

1. A pilot type controlled electromagnetic valve system comprising:

a main valve (F) having a valve housing (14) provided with a valve seat (16), a diaphragm valve disk (11), and a bonnet (15);

a pilot valve (G) having a valve housing (15a) fixed to the main valve (F), a pilot valve disk (3), a fluid path (6) for communicating a pilot valve chamber (7) and the bonnet chamber (5) of the main valve, a primary fluid pressure path (13) for communication between the pilot valve chamber (7) and the primary fluid path (12) of the main valve (F), and a fluid path (8) which provides communication between the pilot valve chamber (7) and the secondary fluid path (9) of the main valve (F), to be opened and closed by the operation of said pilot valve disk (3) and associated parts;

a latching solenoid (11) which is provided with a plunger (2) whose tip portion is connected to the pilot valve disk (3) and holds the plunger (2) in a retracted position or in a protruding by means of a permanent magnet (20); and

a solenoid drive control unit (1) provided with a battery power source (24) for supplying a discharge current from capacitors ($C_1$, $C_2$) to the excitation coil (1) of said solenoid in accordance with valve opening signals from an external device;

characterised in that the solenoid drive control unit (I) is integrally fixed on the main valve, and that a circuit is provided which is arranged so that said capacitor or capacitors, is charged to a pre-determined value and then provides a pulse discharge current to the excitation coil (1) for actuation of the valve for opening or closing the valve, whereby current is only provided by the battery at the time when valve actuation is required.

2. A pilot type controlled electromagnetic valve system as claimed in claim 1 in which the solenoid drive control unit (I) can connect the power source battery (24) and the capacitor ($C_1$) for opening the valve by the operation of the change-over switch (25) in accordance with the valve opening signals from the external device for supplying a discharge current of the capacitor ($C_1$) from a terminal of one end of the excitation coil (1) to a neutral terminal and also can connect the power source battery (24) and the capacitor ($C_2$) for closing the valve by the operation of the change-over switch (25) in accordance with the valve closing signal from the external device for supplying the discharge current of the capacitor ($C_2$) from a terminal of the other end of the excitation coil 1 to the neutral terminal.

3. A pilot type controlled electromagnetic valve system as claimed in claim 1 in which the solenoid drive control unit (I) is fixed on the latching solenoid (H).

## Patentansprüche

1. Vorgesteuertes elektromagnetisches Ventilsystem mit:

einem Hauptventil (F) mit einem einen Ventilsitz (16) aufweisenden Ventilgehäuse (14), einer Ventilmembranscheibe (11) und einem Deckel (15);

einem Pilot- bzw. Vorsteuerventil (G) mit einem am Hauptventil (F) befestigten Ventilgehäuse (15a), einer Fluidführung (6) als Verbindung zwischen einer Pilotventilkammer (7) und einer Deckelkammer (5) des Hauptventils, einer ersten Druckfluidführung (13) als Verbindung zwischen der Pilotventilkammer (7) und der ersten Fluidführung (12) des Hauptventils (F) und einer Fluidführung (8), die eine Verbindung zwischen der Pilotventilkammer (7) und der zweiten Fluidführung (9) des Hauptventils (F) darstellt und durch Betätigung der Pilotventilscheibe (3) und der zugehörigen Teile zu öffnen und zu schließen ist;

einem Verriegelungssolenoid (11), der mit einem Kolben (2) versehen ist, dessen Spitzenbereich mit der Pilotventilscheibe (3) verbunden ist und der von dem Solenoid hinteren Stellung oder von einem Permanentmagneten (20) in einer vorderen Stellung gehalten ist und

einer Solenoidantriebssteuereinheit (I), die mit einer Batterie (24) als Spannungsquelle für die Lieferung eines Entladestroms von Kondensatoren ($C_1$, $C_2$) zu der Erregerspule (1) des Solenoids entsprechend Ventilöffnungssignalen aus einer externen Vorrichtung versehen ist,

**dadurch gekennzeichnet**, daß die Solenoidantriebssteuereinheit (I) in das Hauptventil fest integriert ist und ein Stromkreis in einer Anordnung vorgesehen ist, daß der Kondensator bzw. die Kondensatoren auf einen vorbestimmten Wert aufgeladen ist bzw. sind und dann ein Impulsentladestrom an die Erregerspule (1) zur Betätigung des Ventils zum Öffnen oder Schließen des Ventils geliefert wird, wobei der Strom von der Batterie nur dann geliefert wird, wenn eine Betätigung des Ventils bewirkt werden soll.

2. Vorgesteuertes elektromagnetisches Ventilsystem wie in Anspruch 1 beansprucht, bei dem die Solenoidantriebssteuereinheit (I) Batterie (24) und Kondensator ($C_1$) zum Öffnen des Ventils durch Betätigung des Wechselschalters (25) entsprechend Ventilöffnungssignalen von der externen Vorrichtung zu verbinden vermag, um einen Entladestromfluß des Kondensators ($C_1$) von einer Anschlußklemme am einen Ende der Erregerspule (1) zu einer Null-Klemme zu bewirken, ebenso wie sie die Quellenspannungsbatterie (24) und den Kondensator ($C_2$) zum Schließen des Ventils durch Betätigung des Wechselschalters (25) entsprechend Ventilschließsignalen von der externen Vorrichtung zu verbinden vermag, um einen Entladestromfluß des Kondensators ($C_2$) von einer Anschlußklemme am anderen Ende der Erregerspule (1) zu der Nullklemme zu bewirken.

3. Vorgesteuertes elektromagnetisches Ventilsystem nach Anspruch 1, bei dem die Solenoidantriebssteuereinheit (I) dem Verriegelungssolenoid (H) fest zugeordnet ist.

## Revendications

1. Vanne à clapet pilote électromagnétique comprenant :

une vanne principale (F) ayant un logement ou corps de vanne (14) muni d'un siège de vanne (16), d'un disque de vanne à membrane (11) et d'un chapeau (15) ;

une vanne ou clapet pilote (G) ayant un logement de vanne (15a) fixé sur la vanne principale (F), un disque de vanne ou clapet pilote (3), un circuit de fluide (6) pour la mise en communication de la chambre de vanne pilote (7) et de la chambre de chapeau (5) de la vanne principale, un circuit de pression de fluide primaire (13) pour la mise en communication entre la chambre de vanne pilote (7) et le circuit de fluide primaire (12) de la vanne principale (F) et un circuit de fluide (8) qui assure la communication entre la chambre de vanne pilote (7) et le circuit de fluide secondaire (9) de la vanne principale (F) devant être ouvert et fermé par le fonctionnement du disque de vanne pilote (3) et des pièces associées;

un solénoïde de verrouillage (11) qui est muni d'un plongeur (2) dont la portion d'extrémité est reliée au disque de vanne pilote (3) et maintient le plongeur (2) en position rentrée ou en position sortie au moyen d'un aimant permanent (20) ; et

une unité de commande d'entraînement de solénoïde (1) munie d'une source de puissance batterie (24) pour alimenter un courant de décharge à partir des capaciteurs ou condensateurs ($C_1$, $C_2$) à destination de la bobine d'excitation (1) du solénoïde en fonction des signaux d'ouverture de vanne provenant d'un dispositif extérieur ;

caractérisée en ce que l'unité de commande d'entraînement de solénoïde (I) est fixée de façon intégrale ou solidaire et en ce qu'il est prévu un circuit qui est disposé de façon que le ou les capaciteurs soient chargés à une valeur prédéterminée et fournissent ensuite un courant de décharge pulsé à la bobine d'excitation (1) pour l'actionnement de la vanne en vue de l'ouverture ou de la fermeture de la vanne, le courant n'étant fourni par la batterie qu'au moment où l'actionnement de vanne est nécessaire.

2. Vanne à clapet pilote électromagnétique selon la revendication 1, dans laquelle l'unité de commande d'entraînement de solénoïde (I) peut relier la batterie de source de puissance (24) et le capaciteur ($C_1$) pour l'ouverture de la vanne par l'actionnement du commutateur de permutation (25) en fonction des signaux d'ouverture de vanne provenant du dispositif extérieur pour amener un courant de décharge du capaciteur ($C_1$) en provenance d'une borne d'une extrémité de la bobine d'excitation (1) vers une borne neutre et peut également relier la batterie de source de puissance (24) et le capaciteur ($C_2$) pour la fermeture de la vanne par l'actionnement du commutateur de permutation (25) en fonction du signal de fermeture de vanne provenant du dispositif extérieur pour amener le courant de décharge du capaciteur ($C_2$) en provenance d'une borne de l'autre extrémité de la bobine d'excitation (1) vers la borne neutre.

3. Vanne à clapet pilote électromagnétique selon la revendication 1, dans laquelle l'unité de commande d'entraînement de solénoïde (1) est fixée sur le solénoïde de verrouillage (H).

# FIG. 1

FIG. 2

EP 0 349 159 B1

# F I G. 3

# F I G. 4